# FASCICULE DE BREVET EUROPEEN

(11) **EP 3 826 928 B1**
(45) Date de publication et mention de la délivrance du brevet: **26.04.2023**
(21) Numéro de dépôt: 19742213.2
(22) Date de dépôt: 23.07.2019
(51) Int. Cl.: B65B 69/00, A01D 87/12

(54) **MACHINE PERFECTIONNEE POUR DEFAIRE ET DISTRIBUER DES BOTTES DE LITIERE ANIMALE OU DES BOTTES DE FOURRAGE**
GERÄT ZUM ZERLEGEN UND VERTEILEN VON BALLEN FÜR DAS STREUEN VON TIERE ODER FUTTERN
DEVICE FOR DISMANTLE AND DISTRIBUTE BALES FOR ANIMALS LITER OR FOR ANIMALS FEED

(30) Priorité: 24.07.2018 FR 1856833
(43) Date de publication de la demande: 02.06.2021
(73) Titulaire: Etablissements Emily, 29800 Tréflévénez (FR)
(72) Inventeur: TROADEC, Vincent, 29800 SAINT-THONAN (FR); MIOSSEC, Arnaud, 29440 PLOUZEVEDE (FR)
(74) Mandataire: Cabinet Le Guen Maillet
(86) Numéro de dépôt international: PCT/EP2019/069754
(87) Numéro de publication internationale: WO 2020/020863

(56) Documents cités:
- EP-A1- 2 581 335
- EP-A2- 1 175 829
- EP-B1- 2 581 335
- WO-A1-00/30438
- WO-A1-2015/091377
- DE-A1- 1 556 862
- FR-A1- 3 007 241

## Description

La présente invention concerne une machine perfectionnée pour défaire et distribuer des bottes de litière animale ou des bottes de fourrage.

Une machine pour défaire et distribuer des bottes de litière animale ou des bottes de fourrage est, dans l'invention, une machine portée, tractée ou automotrice, conçue pour défaire des bottes de litière animale ou des bottes de fourrage, cylindriques ou parallélépipédiques, et pour étaler leur contenu sur le sol ou pour éparpiller leur contenu sur le sol à l'aide d'un organe de décompactage.

Il est connu de compacter une matière telle que du fourrage dans une machine communément appelée presse. Cette machine compresse le fourrage puis l'entoure de liens, d'un filet ou d'une enveloppe de protection pour le maintenir dans son état compacté. Ces bottes de fourrage ainsi produites sont stockées et utilisées le moment venu, sous la forme de fourrage pour l'alimentation des animaux d'élevage.

Les bottes de litière animale, les bottes de fourrage, présentent une géométrie typiquement parallélépipédique ou cylindrique.

Pour utiliser, par exemple, une botte de litière animale, il convient de retirer les liens qui l'entourent. Au regard de la masse relativement importante d'une telle botte, de plusieurs centaines de kilogrammes, celle-ci est manipulée par l'intermédiaire d'un engin de levage puis défaite dans une machine telle qu'une pailleuse, chargée de désenchevêtrer son contenu et d'éjecter les fibres de matières ainsi défaites, par exemple, dans un bâtiment d'élevage ou de les étaler sur le sol. Quand la botte est chargée dans la machine, la personne utilisatrice de cette machine ou un assistant, doit retirer les liens qui l'enserrent. La personne utilise un couteau pour couper les liens et tente tant bien que mal de tirer sur ceux-ci pour les enlever.

Dans la publication FR-A1-3007241 est présentée une pailleuse équipée d'un dispositif pour couper et retirer les liens qui confinent une botte cylindrique. Le dispositif comprend, d'une part, une scie disposée à l'avant de la machine et qui est mobile en direction de la botte, à l'aide d'un vérin électrique, de sorte à sectionner les liens, et d'autre part, d'un rouleau disposé à l'arrière de la machine et qui est relié à un moteur hydraulique d'entraînement à rotation.

Après avoir été coupés par la scie, la partie supérieure des liens de la botte étant facilement accessible, ceux-ci sont tirés manuellement vers le rouleau et sont enroulés sur ce rouleau manuellement et maintenus grâce à des crochets fixés sur celui-ci.

La machine dispose d'un interrupteur-poussoir de mise en marche du rouleau qui tourne sur lui-même et d'un tapis roulant sans fin qui fait tourner la botte dans la machine pour permettre aux liens de se libérer dans la partie inférieure et d'aller s'enrouler autour du rouleau. Dès que les liens sont entièrement libérés de la botte et enroulés autour du rouleau, on relâche l'interrupteur et le système s'arrête. Ainsi, la botte est prête à être distribuée aux animaux. Il faut alors tirer manuellement sur les liens enroulés autour du rouleau ultérieurement pour les enlever.

La construction de cette machine est relativement complexe. Par ailleurs, elle ne peut retirer les liens, le filet ou le film de protection, que de bottes cylindriques.

On connaît encore à la lecture du document EP1175829A2, un dispositif pour retirer le matériau d'enveloppement autour d'une balle cylindrique de fourrage. Le dispositif comporte un bâti, un premier élément de support et un deuxième élément de support attachés de manière mobile au bâti, un couteau attaché de manière mobile au bâti et agencé pour couper au moins l'enrubannage d'une balle sur les premier et second éléments de support, des moyens de retrait du matériau d'enveloppement. Le dispositif est agencé pour prélever des balles cylindriques, les soulever, couper le matériau d'enveloppement, puis retirer et collecter le matériau d'enveloppement, libérant ainsi la balle de fourrage.

Les deux supports sont mobiles par rapport au bâti, entre une première position à une première distance et une seconde position à une seconde distance, qui est plus grande.

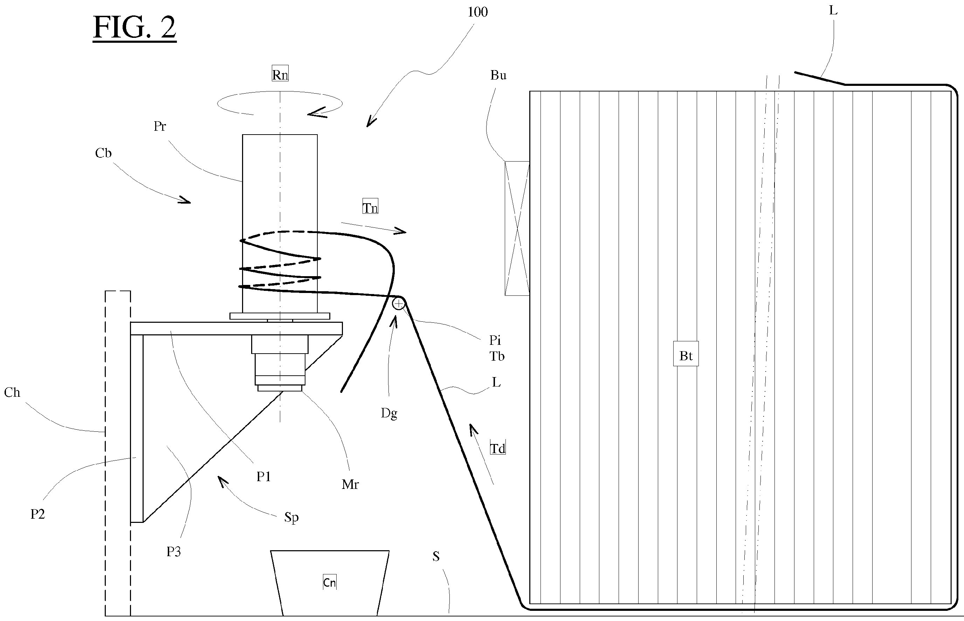

Le moyen de retrait du matériau d'enveloppement comprend, sur les Figs. 2, des crantages fixés en saillie le long des deux tubes cylindriques constitutifs des deux supports et qui s'écartent autour de la balle pour retirer par agrippement le matériau d'enveloppement, pendant le fonctionnement du dispositif.

En variante de réalisation, les moyens de retrait du matériau d'enveloppement sont constitués de deux cônes rotatifs entraînés par des moteurs et autour desquels sont fixées des broches pour arracher et collecter par rotation des cônes le matériau d'enveloppement. Les deux cônes rotatifs sont coaxiaux et ils sont montés sur deux bras articulés qui sont déplacés par un vérin télescopique. En variante de réalisation, les cônes sont remplacés par des cylindres. Le document WO2015/091377A1 montre un dispositif comportant les caractéristiques du préambule de la revendication 1.

Le demandeur a cherché à concevoir une machine pour défaire et distribuer des bottes de litière animale ou des bottes de fourrage, d'une construction plus simple et également plus simple à utiliser, pour retirer les liens, le filet ou le film de protection entourant ou ceinturant de telles bottes.

A cet effet, est proposée une machine pour défaire et distribuer des bottes de litière animale ou des bottes de fourrage selon la revendication 1.

Il est ainsi facile de retirer ces liens, ce filet ou ce film de protection, après leur sectionnement, avant de faire fonctionner la machine pour procéder au décompactage de la botte de litière animale ou de la botte de fourrage.

Selon une caractéristique additionnelle de l'invention, la pièce de révolution est un cylindre.

Un opérateur enroule au moins un tour des liens, du filet ou du film de protection autour du cylindre et commande le fonctionnement du moyen d'entraînement à rotation, en tirant sur l'extrémité libre de ceux-ci, la partie enroulée adhère sur le cylindre qui finit par sortir les liens, le filet ou le film de protection qui entourent ou ceinturent ladite botte.

En variante de réalisation, la pièce de révolution est un tronc de cône formant une première partie du cabestan et ledit cabestan comprend une seconde partie de collecte temporaire des liens, du filet ou du film de protection, les deux parties étant coaxiales, la seconde partie prolongeant la petite base de la première partie tronconique.

En enroulant préférentiellement les liens, le filet ou le film de protection autour du tronc de cône constitutif de la première partie, ceux-ci ne s'emmêlent pas, ne se recouvrent pas. Ils ripent en direction de la seconde partie de collecte temporaire. Ils parviennent détendus sur la seconde partie de collecte temporaire.

En variante de réalisation, la pièce de révolution présente un profil concave formant une première partie du cabestan et ledit cabestan comprend une seconde partie de collecte temporaire des liens, du filet ou du film de protection, les deux parties étant coaxiales, la seconde partie prolongeant la petite base de la première partie à profil concave.

En enroulant préférentiellement les liens, le filet ou le film de protection autour de la paroi concave constitutive de la première partie, ceux-ci ne s'emmêlent pas.

Selon une caractéristique additionnelle de l'invention, la seconde partie de collecte temporaire des liens est un cylindre.

Les liens, le filet ou le film de protection s'enroulent et se déroulent facilement autour du cylindre.

Le dispositif de guidage des liens, du filet ou du film de protection, guide en direction de la première partie, la paroi arrondie du dispositif de guidage étant disposée de sorte que les liens, le filet ou le film de protection tendus par le cabestan puissent s'enrouler en priorité sur ladite première partie à profil tronconique ou à profil concave.

Les liens, le filet ou le film de protection tendus ripent sur le profil conique ou concave sans s'emmêler ni se chevaucher et ils sont transférés sur la seconde partie de collecte temporaire des liens, du filet ou du film de protection.

Avantageusement, la paroi arrondie est un tube.

On peut ainsi faire passer les liens, le filet ou le film de protection d'un côté ou de l'autre pour qu'ils puissent être enroulés et tirés par la paroi constitutive de la première partie.

Selon une caractéristique additionnelle de l'invention, le moyen d'entraînement à rotation est un moteur hydraulique et il est pourvu d'un distributeur de commande raccordé audit moteur hydraulique pour le faire fonctionner.

En actionnant le distributeur, l'opérateur peut commander le fonctionnement du cabestan de la machine.

Selon une caractéristique additionnelle de l'invention, la machine est agencée sous la forme d'une remorque portée par au moins un essieu.

Selon une caractéristique additionnelle de l'invention, la machine est pourvue d'une butée disposée en vis-à-vis du cabestan pour empêcher la botte de venir en contact avec ledit appareil pendant l'extraction des liens de ladite botte.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue latérale d'une remorque de paillage destinée à défaire et distribuer des bottes de litière animale ou des bottes de fourrage et qui est équipée d'un appareil destiné à retirer les liens, les filets ou les films de protection qui entourent lesdites bottes avant de procéder à leur décompactage selon l'invention,
la Fig. 2 représente une vue de face d'un appareil destiné à retirer les liens, les filets ou les films de protection, entourant ou enveloppant une botte de litière animale ou une botte de fourrage, selon l'invention,
la Fig. 3 représente une vue de face d'une première variante de réalisation d'un appareil destiné à retirer les liens, le filet ou le film de protection d'une botte de litière animale ou d'une botte de fourrage selon l'invention,
la Fig. 4 représente une vue latérale d'une remorque de paillage destinée à défaire et distribuer des bottes de litière animale ou des bottes de fourrage, équipée d'une variante de réalisation d'un appareil destiné à retirer les liens, le filet ou le film de protection d'une botte de litière animale ou d'une botte de fourrage selon l'invention,

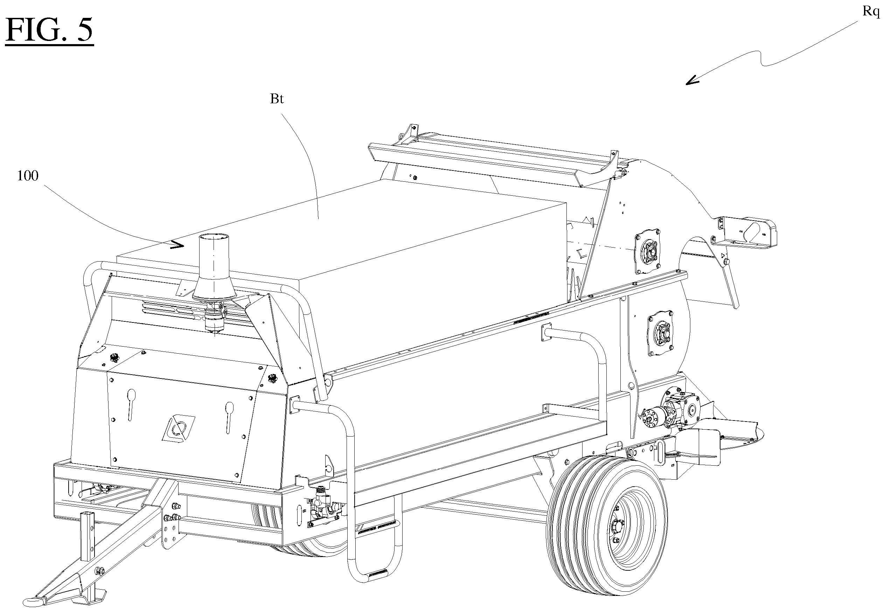

la Fig. 5 représente une vue en perspective de trois quarts avant d'une remorque de paillage destinée à défaire et distribuer des bottes de litière animale ou des bottes de fourrage, dans laquelle est présente une botte parallélépipédique, la remorque de paillage étant équipée d'une variante de réalisation d'un appareil destiné à retirer les liens, le filet ou le film de protection d'une botte de litière animale ou d'une botte de fourrage selon l'invention,
la Fig. 6a représente une vue en perspective d'un porte-outil destiné à être utilisé, d'une part, en tant que pique-botte et, d'autre part, pour porter et faire fonctionner un accessoire,
la Fig. 6b représente une vue en perspective d'une dérouleuse de botte cylindrique, accessoire susceptible d'être porté par le porte-outil et qui est équipée d'une variante de réalisation d'un appareil destiné à retirer les liens, les filets ou les films de protection entourant des bottes de litière animale ou des bottes de fourrage selon l'invention,
la Fig. 7a représente une vue de face d'une seconde variante de réalisation d'un appareil destiné à retirer les liens, les filets ou les films de protection de bottes de litière animale ou de bottes de fourrage selon l'invention,
la Fig. 7b représente une vue de dessus d'une seconde variante de réalisation d'un appareil destiné à retirer les liens, les filets ou les films de protection de bottes de litière animale ou de bottes de fourrage selon l'invention,
la Fig. 8 représente une vue de face d'une troisième variante de réalisation d'un appareil destiné à retirer les liens, les filets ou les films de protection de bottes de litière animale ou de bottes de fourrage selon l'invention et,
la Fig. 9 représente une vue de face d'une quatrième variante de réalisation d'un appareil destiné à retirer les liens, les filets ou les films de protection de bottes de litière animale ou de bottes de fourrage selon l'invention.

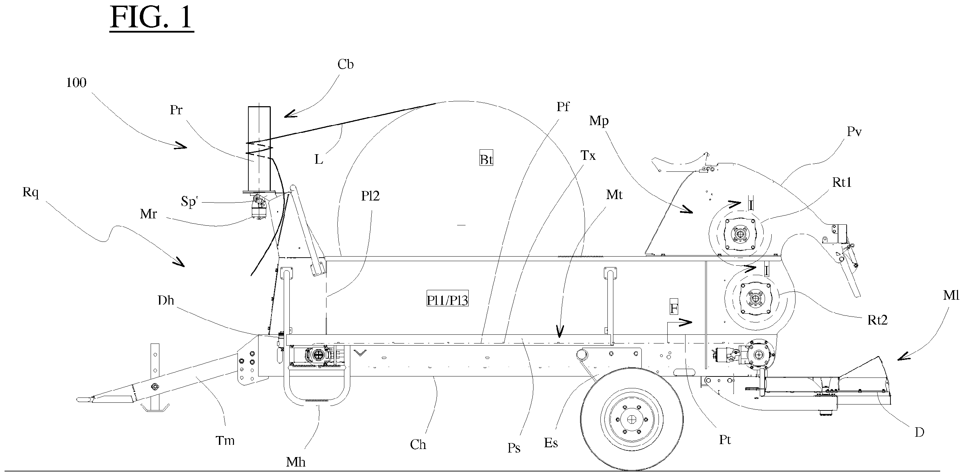

Une remorque Rq de paillage ou de distribution de fourrage est présentée sur la Fig. 1. Elle est destinée à mettre en oeuvre, soit le paillage d'une botte de litière animale pour être utilisée comme litière, soit la distribution d'une botte de fourrage pour servir d'aliment à des animaux. Dans la suite de cette description, seul le terme botte est utilisé pour qualifier une botte de litière animale ou une botte de fourrage. Rappelons qu'un fourrage est utilisé pour l'alimentation des animaux d'élevage et qu'une litière animale est utilisée pour procurer un couchage à des animaux d'élevage et absorber l'humidité.

Parmi les principales matières susceptibles d'entrer dans la composition d'une botte de litière animale, on peut citer : la paille de blé, la paille d'orge, la paille d'avoine, la paille de colza, la paille de riz, la paille de joncs, la paille de fougères, la paille de landes, le miscanthus.

Parmi les principales matières susceptibles d'entrer dans la composition d'une botte de fourrage, on peut citer : le trèfle, l'herbe, la paille.

Les bottes de litière animale sont très fréquemment ceinturées de liens, tels que des ficelles ou d'un filet qui les entourent sur un ou deux tours, pour maintenir leur cohésion dans leur état compacté et qu'il convient de retirer avant de procéder à leur paillage.

Les bottes de fourrage sont bien souvent enveloppées dans un film de protection qu'il convient de retirer avant de les distribuer comme affourage. Elles peuvent être stockées en extérieur.

La remorque Rq comprend un plateau de chargement Pt dimensionné pour supporter la masse d'au moins une botte, qui est monté sur un châssis Ch porté par un essieu Es. Celui-ci dispose d'un timon Tm permettant l'attelage de la remorque Rq à un crochet d'attelage d'un engin de traction, tel qu'un tracteur.

Le plateau Pt comprend une paroi de fond Pf sur laquelle il convient de déposer ladite botte. Cette paroi de fond est ceinturée par trois parois de pourtour Pl, et précisément par deux parois latérales Pl1 et P13 ainsi que par une paroi avant Pl2 réunissant les deux parois latérales, pour respectivement caler latéralement la botte sur les deux côtés latéraux du plateau et sur sa partie avant tournée vers le timon Tm, afin qu'elle demeure sur le plateau pendant le roulage de la remorque Rq. Seule une paroi latérale, la paroi Pl3, est visible sur cette vue de côté.

La remorque Rq est équipée d'un moyen de transport Mt de la botte sur le plateau Pt qui est conçu pour la déplacer en direction de la partie arrière de la remorque Rq, c'est-à-dire en direction du côté opposé au timon Tm.

La remorque Rq est équipée d'un moyen de décompactage Mp disposé dans la partie arrière de la remorque Rq et conçu pour décompacter la matière constitutive de la botte et l'évacuer ensuite en dehors de la remorque Rq.

Le moyen de transport Mt est agencé pour déplacer la botte en direction du moyen de décompactage Mp. Le moyen de transport Mt comprend une paire de chaînes reliées à intervalles réguliers par l'intermédiaire de tasseaux Tx, les deux chaînes pouvant circuler en boucle respectivement autour de deux pignons portés par un premier arbre et un second arbre disposés, pour l'un, à l'avant du plateau Pt, c'est-à-dire pratiquement sous la paroi avant Pl2 et disposé, pour l'autre, à l'arrière du plateau, c'est-à-dire pratiquement sous la partie arrière ouverte de la remorque qui est dépourvue de paroi arrière. L'un des arbres est moteur. Cet arbre moteur est relié à un moyen d'entraînement à rotation, tel qu'un moto réducteur hydraulique, raccordé à une pompe hydraulique susceptible de l'alimenter au travers d'un distributeur. La pompe hydraulique est, par exemple, celle qui est portée par l'engin de traction et qui est dédiée à l'alimentation en fluide hydraulique d'accessoires. Dans leur trajet supérieur, les tasseaux Tx glissent sur la paroi de fond Pf suivant une trajectoire indiquée par la flèche F, pour déplacer une botte en direction du moyen de décompactage Mp.

Le moyen de décompactage Mp comprend au moins un rotor Rt destiné à grignoter pendant sa rotation la matière constitutive de la botte pendant son déplacement mis en oeuvre par le moyen de transport Mt. Le rotor Rt est disposé transversalement au-dessus de la partie arrière du plateau Pt, dépourvue de paroi arrière. Le rotor Rt est formé d'une paroi cylindrique portant à sa périphérie, des couteaux aptes à déchiqueter la matière constitutive de la botte en déplacement et la projeter à l'extérieur de la remorque. Le rotor est relié à un moyen d'entraînement à rotation, tel qu'un moteur hydraulique raccordé à la pompe hydraulique au travers d'un distributeur. Sur cette Fig. 1, la remorque Rq est équipée de deux rotors Rt1 et Rt2 d'axe transversal et qui sont superposés. Ils sont disposés au-dessus de la partie arrière du plateau Pt. La matière éjectée vers l'arrière de la remorque Rq est canalisée par l'intermédiaire d'une plaque de renvoi Pv concave, vue de l'intérieur de ladite remorque et qui forme un déflecteur. Cette plaque de renvoi Pv est disposée à l'arrière de la remorque Rq et s'étend vers le bas. Elle est tenue à cet effet par l'intermédiaire de deux joues qui prolongent par le haut les deux parois latérales Pl1 et Pl3.

Les deux rotors Rt1 et Rt2 tournent, dans le sens indiqué par les flèches I pour happer la matière de la botte afin de la projeter à l'arrière de la remorque et en direction de la plaque de renvoi Pv. Dans une variante de réalisation, non représentée, le sens de rotation du rotor supérieur Rt1 est inversé.

La remorque Rq est également équipée d'un moyen d'étalement Ml de la matière décompactée en provenance des rotors Rt, pour l'éparpiller sur le sol. Le moyen d'étalement Ml comprend une paire de disques D, d'axe vertical dans la position d'utilisation de la remorque, et qui sont disposés sous la plaque de renvoi Pv et sur lesquels tombe la matière en provenance de ladite paroi formant un déflecteur. Chaque disque D porte sur sa face supérieure des palettes chargées d'attraper la matière pour la projeter en périphérie du disque.

Chaque disque D est monté sur un arbre qui est relié à un moyen d'entraînement à rotation tel qu'un moteur hydraulique raccordé à la pompe hydraulique au travers d'un distributeur.

Sur cette Fig. 1, on remarque la présence d'une passerelle Ps qui jouxte le plateau de chargement Pt et qui est disposée à l'extérieur de la paroi latérale Pl3, c'est-à-dire du côté extérieur à la remorque Rq. Un marchepied Mh est disposé sous la passerelle Ps pour faciliter l'accès d'une personne sur ladite passerelle.

La remorque Rq de l'invention est avantageusement pourvue d'un appareil 100 pour retirer les liens, le filet ou le film de protection qui entourent ou ceinturent la botte.

Sur la Fig. 2 est présentée une vue en gros plan d'un appareil 100 conçu pour être associé à une machine conçue pour défaire et distribuer des bottes de litière animale ou des bottes de fourrage, afin de retirer les liens L qui ceinturent une botte Bt. La botte Bt présente une géométrie prismatique sur cette Fig. 2. Un seul lien L est dessiné sur cette Fig. 2. La masse d'une telle botte est bien souvent de plusieurs centaines de Kg et il est difficile pour une personne de retirer, après sectionnement des liens, par exemple à l'aide d'un couteau, la partie de ces liens qui est située, notamment, entre la botte Bt et la surface S sur laquelle elle repose. Quand les noeuds sont situés du côté de ladite surface, les liens sont très difficiles à retirer. Quand le plancher sur lequel repose la botte à plat est le plancher d'une machine conçue pour défaire et distribuer des bottes de litière animale ou des bottes de fourrage, équipée de taquets de transport de la botte, les noeuds ne parviennent pas à chevaucher les taquets et le travail de retrait des liens est extrêmement fastidieux pour une personne. La machine n'est représentée que par son châssis Ch sur cette vue en gros plan de l'appareil 100.

Les liens sont constitués typiquement de ficelles ou de filets. Certaines bottes pouvant être stockées à l'extérieur sont enveloppées d'un film de protection réalisé en matière plastique.

L'appareil 100 comprend un cabestan Cb mobile à rotation qui est relié à un moyen d'entraînement à rotation Mr de celui-ci. Le moyen d'entraînement à rotation Mr est fixé sur un support Sp chargé de tenir l'appareil 100 sur la machine pour défaire et distribuer des bottes de litière animale ou des bottes de fourrage. Le support Sp peut être fixé sur le châssis Ch de ladite machine. Le support Sp est constitué, dans l'exemple de réalisation présenté sur cette Fig. 2, de deux plaques P1, P2, réunies à l'équerre, l'une d'elles, P1, servant à fixer le moyen d'entraînement à rotation Mr et l'autre, P2, servant à la fixation de l'appareil 100 sur le châssis Ch de la machine pour défaire et distribuer des bottes de litière animale ou des bottes de fourrage. La paroi P1 est traversée d'un trou pour le passage de l'arbre du moyen d'entraînement à rotation Mr et sur lequel est monté le cabestan Cb. Le moyen d'entraînement à rotation Mr est fixé sur une face de la plaque Pl et le cabestan Cb apparaît du côté de son autre face en s'élançant verticalement vers le haut sur cette Fig. 2. Une plaque intermédiaire P3 relie les deux parois P1 et P2, pour renforcer la structure du support Sp.

Le moyen d'entraînement Mr est, notamment, un moteur hydraulique, un moto réducteur électrique, ou un mécanisme mettant en oeuvre un réducteur à pignons associé à une manivelle.

Le cabestan Cb comprend une pièce de révolution Pr qui présente sur cette Fig. 2, la géométrie d'un cylindre. Le cylindre est relié au moyen d'entraînement Mr. La hauteur du cylindre Mr est suffisante pour tirer les liens sur pratiquement toute la hauteur de la botte Bt. Le cylindre Pr sert, d'une part, à tirer sur le lien par adhérence d'au moins une boucle des liens enroulés autour dudit cylindre et d'autre part, de moyens de collecte temporaire des liens L.

Le fonctionnement de l'appareil 100 se présente de la manière suivante. Un opérateur sectionne les liens de la botte Bt, par exemple à l'aide d'un couteau, et tire une extrémité de ces liens pour les entourer d'au moins un tour autour du cylindre Pr. L'opérateur déclenche le fonctionnement du moyen d'entraînement à rotation Mr.

En maintenant une légère traction manuelle sur les extrémités libres des liens L, ceux-ci parviennent à adhérer sur la paroi constitutive du cylindre Pr. La traction sur les liens L par l'opérateur est indiquée par la flèche Tn. Le couple moteur absorbé par le travail de ce cylindre Pr est utilisé pour tirer sur les liens L par adhérence de ladite au moins une boucle et qui peuvent alors être extraits de la botte Bt. Le cylindre Pr sert également de moyen de collecte temporaire des liens L.

La traction sur les liens L tendus est indiquée par la flèche Td. La rotation du cabestan Cb est indiquée par la flèche Rn. L'opérateur dirige le lien L défait et enroulé temporairement sur le cylindre Pr, dans un conteneur de collecte Cn disposé avantageusement sous l'appareil 100.

Une butée Bu est disposée entre la botte Bt et l'appareil 100 pour éviter que la botte Bt ne vienne en contact avec l'appareil 100 pendant l'extraction des liens L de ladite botte. La butée Bu est constituée sur cette Fig. 1 d'une plaque plane qui est orientée verticalement.

L'appareil 100 monté dans une machine pour défaire et distribuer des bottes de litière animale ou des bottes de fourrage de l'invention, convient pour mettre en oeuvre facilement le retrait des liens, des filets ou des films de protection qui entourent les bottes. Il peut être orienté dans n'importe quelle position.

L'appareil 100 est pourvu d'un dispositif de guidage Dg chargé de guider les liens L en direction du cylindre Pr, pendant leur traction par le cabestan Cb pour permettre leur enroulement autour dudit cylindre. Le dispositif de guidage Dg comprend sur cette Fig. 2, une paroi arrondie Pi qui est orientée pour que les liens L puissent prendre appui et glisser sur elle pendant le fonctionnement de l'appareil 100. La paroi arrondie Pi est constituée, sur cette Fig. 2, d'un tube Tb. Son diamètre est relativement petit comparé à celui du cylindre Pr. La partie de travail du tube Tb sur laquelle glissent les liens L est située dans la hauteur du cylindre Pr en considérant l'axe du cabestan Cb. L'axe du tube Tb est préférentiellement disposé de manière perpendiculaire à celui du cabestan Cb. Sur cette Fig. 2, le tube Tb est situé pratiquement au tiers de la hauteur du cylindre Pr. La longueur de ce tube Tb est suffisante pour dévoyer les liens L sur toute la largeur de la botte Bt.

Sur la Fig. 1, l'appareil 100 est ici monté sur un support Sp' fixé sur la paroi avant Pl2 et qui est agencé pour le tenir à l'extérieur de la remorque Rq et au-dessus de ladite paroi avant P12. Le support Sp' est disposé non loin de la passerelle Ps pour permettre à un opérateur de l'utiliser lorsqu'il est présent sur ladite passerelle. Le support Sp' peut intégrer un carénage aménagé pour éviter que les liens n'aillent autour du moyen d'entraînement à rotation Mr.

Le moyen d'entraînement à rotation Mr du cabestan Cb de l'appareil 100 est un moteur hydraulique destiné à être raccordé à ladite pompe hydraulique au travers d'un distributeur hydraulique Dh qui est de préférence un distributeur à commande au pied.

Le distributeur hydraulique Dh est disposé sur la remorque Rq pour être accessible par le pied d'une personne présente sur ladite passerelle. Sur cette Fig. 1, le distributeur hydraulique Dh est monté à une extrémité de la passerelle Ps qui est celle tournée du côté de l'appareil 100.

Le fonctionnement de la remorque Rq se présente de la manière suivante : la remorque Rq est attelée à un tracteur et le circuit hydraulique du tracteur est raccordé à celui de la remorque Rq. Une botte Bt est déposée sur le plateau Pt. Pendant le retrait du lien de la botte Bt, la remorque est à l'arrêt, c'est-à-dire que son moyen de transport Mt, son moyen de décompactage Mp et son moyen d'étalement Ml ne fonctionnent pas. Un opérateur monte sur la passerelle Ps puis va dans le plateau Pt et coupe les liens L qui ceinturent la botte Bt, par exemple à l'aide d'un couteau, puis prend une extrémité de ceux-ci, et revient sur la passerelle Ps et les enroule d'au moins un tour autour du cabestan Cb. Il conserve en main l'extrémité libre des liens L et déclenche la mise en marche du moyen d'entraînement à rotation Mr en appuyant sur la pédale du distributeur hydraulique Dh, ce qui déclenche l'entraînement à rotation du cabestan Cb.

En maintenant une légère traction manuelle sur les extrémités libres des liens L, ladite au moins une boucle enroulée sur la paroi constitutive du cylindre Pr parvient à adhérer. La traction sur les liens L par l'opérateur est indiquée par la flèche Tn (Fig. 2). Le couple moteur absorbé par le cylindre Pr en rotation est utilisé pour tirer, par adhérence, sur les liens L qui peuvent alors être extraits de la botte Bt. La traction sur les liens L tendus est indiquée par la flèche Td (Fig. 2). La rotation du cabestan Cb est indiquée par la flèche Rn (Fig. 2). Les liens L retirés de la botte Bt et ôtés du cabestan Cb sont ensuite déposés dans le conteneur de collecte Cn (Fig. 2).

L'opérateur descend de la remorque et s'installe au volant du tracteur pour mettre en oeuvre le paillage ou la distribution de la botte Bt en déclenchant, par une commande appropriée, le fonctionnement du moyen de transport Mt, du moyen de décompactage Mp et du moyen d'étalement Ml.

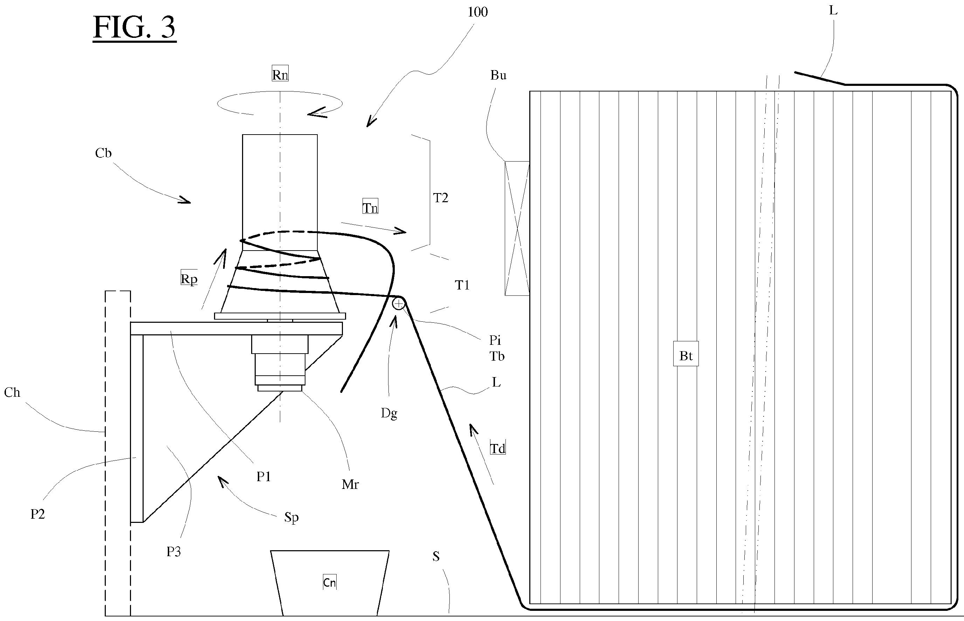

Dans une première variante de réalisation présentée sur la Fig. 3, le cabestan Cb de l'appareil 100 comprend une pièce de révolution formant une première partie T1 tronconique de traction des liens L pour les retirer de la botte Bt, ainsi qu'une seconde partie T2 de collecte temporaire des liens L. Cette seconde partie T2 présente, sur cette Fig. 3, une géométrie cylindrique. Les deux parties T1 et T2 sont coaxiales. La seconde partie T2 cylindrique prolonge la petite base de la première partie T1 tronconique. La conicité de la première partie T1 est de préférence supérieure à 50 %. Les deux parties T1 et T2 sont liées mutuellement d'un point de vue mécanique. Elles peuvent ainsi être constituées d'un seul et même composant. La jonction périphérique entre ces deux parties T1 et T2 est préférentiellement une surface continue.

On remarquera que la seconde partie T2 peut cependant être montée libre à rotation autour de son axe commun avec celui de la première partie T1.

Par ailleurs, l'axe du moyen d'entraînement Mr et l'axe du cabestan Cb sont communs.

L'appareil 100 est pourvu avantageusement d'un dispositif de guidage Dg chargé de guider les liens L en direction de la première partie T1 tronconique, pendant leur traction par le cabestan Cb pour permettre leur enroulement autour de cette première partie T1. Le dispositif de guidage Dg comprend sur cette Fig. 3, une paroi arrondie Pi qui est orientée pour que les liens L puissent prendre appui et glisser sur elle pendant le fonctionnement de l'appareil 100. La paroi arrondie Pi est constituée, sur cette Fig. 1 d'un tube Tb. Son diamètre est relativement petit comparé à celui de la seconde partie T2 cylindrique. La partie de travail du tube Tb sur laquelle glissent les liens L est située dans la hauteur de la première partie T1 en considérant l'axe du cabestan Cb. L'axe du tube Tb est préférentiellement disposé de manière perpendiculaire à celui du cabestan Cb. Sur cette Fig. 3, le tube Tb est situé pratiquement au tiers de la hauteur de cette première partie T1 depuis sa grande base. La longueur de ce tube Tb est suffisante pour dévoyer les liens L en provenance de toute la largeur de la botte Bt.

Ce dispositif de guidage Dg n'est pas indispensable si la direction de traction des liens est orientée perpendiculairement à celle de l'axe de la première partie T1 ou est orientée du côté de la grande base de la première partie T1.

Sur cette Fig.3, le tube Tb est monté fixement, sans aucun degré de liberté. Dans une variante de réalisation, non représentée, le tube est monté tournant et libre à rotation pour réduire l'usure de sa surface de contact avec le lien.

Un disque est accolé à la grande base de la première partie cylindrique T1, pour dévoyer, le cas échéant, les liens autour de la première partie T1, afin d'éviter qu'ils ne s'enroulent inopinément autour du moyen d'entraînement, compte-tenu de la disposition à axe vertical tourné vers le haut du dispositif 100. La présence de ce disque complète les effets du carénage.

Ce disque peut également être utilisé comme un dispositif de guidage chargé de guider les liens L en direction de la première partie T1 tronconique, pendant sa traction par le cabestan Cb, lorsque le lien est tiré au niveau de la grande base de la première partie T1.

Dans une variante de réalisation, non représentée, la paroi arrondie est constitutive d'une paroi de la machine pour défaire et distribuer des bottes de litière animale ou des bottes de fourrage de l'invention, par exemple une paroi dont un bord est arrondi.

Le fonctionnement de l'appareil 100 se présente de la manière suivante, en relation avec l'extraction des liens L entourant une botte Bt en appui sur une surface, la botte Bt étant disposée à proximité de l'appareil 100. La botte Bt est ceinturée d'au moins un lien L. Un seul lien est considéré pour simplifier la lecture. Un opérateur coupe le lien L, puis prend une extrémité de celui-ci, le fait passer au-dessus du tube Tb ou par en dessous si le lien est tiré par le haut et vient l'enrouler d'au moins un tour autour du cabestan Cb. Il conserve en main l'extrémité libre du lien L et déclenche la mise en marche du moyen d'entraînement à rotation Mr.

En maintenant une légère traction manuelle sur l'extrémité du lien L, la boucle ou les boucles viennent s'enrouler autour de la paroi constitutive de la première partie T1 tronconique et la tension dans son brin en provenance de la botte Bt l'oblige à adhérer sur ladite paroi. La traction qu'exerce l'opérateur sur le brin libre est indiquée par la flèche Tn. Le couple moteur absorbé par cette première partie T1 est utilisé pour tirer, par adhérence, sur le lien L qui peut alors être retiré de la botte Bt. La traction sur le brin tendu du côté de la botte Bt est indiquée par la flèche Td. La rotation du cabestan Cb est indiquée par la flèche Rn.

On remarquera que, compte tenu de la conicité de la première partie T1, le lien L ripe en direction de la seconde partie T2 cylindrique, comme le suggère la flèche Rp. Le lien ne se chevauche pas, ne se croise pas. Cette circulation régulière du lien L évite la formation de noeuds, l'emmêlement du lien L, ce qui rend son extraction facile. La tension de l'enroulement du lien L, lorsqu'il parvient sur cette seconde partie T2 cylindrique, est remplacée par la tension qu'exerce l'opérateur sur le brin libre et qui est relativement faible de l'ordre de quelques daN. L'opérateur peut ainsi facilement diriger le lien L défait et enroulé temporairement sur la seconde partie cylindrique T2, dans un conteneur de collecte Cn disposé avantageusement sous l'appareil 100. Si la tension exercée par l'utilisateur sur le lien est trop faible, celui-ci patine sur la paroi conique. Cette conséquence supprime les risques d'accident par pincement des doigts de l'utilisateur.

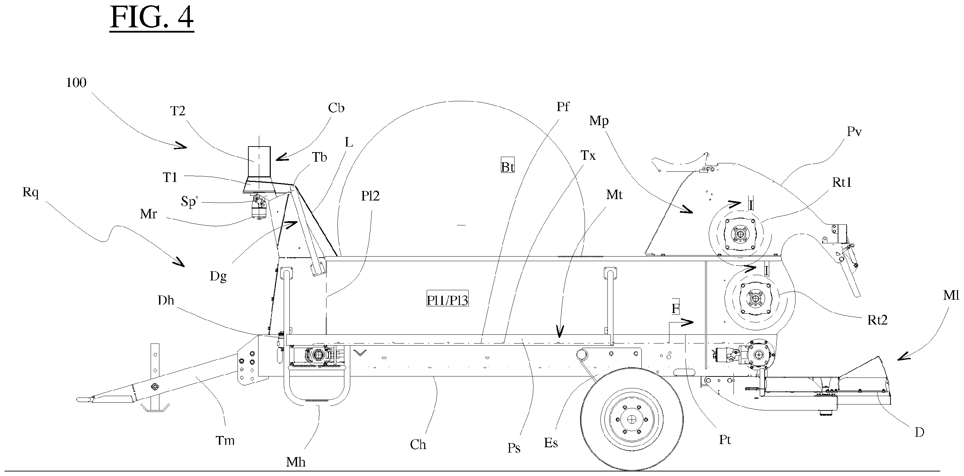

Une remorque équipée de cette variante de réalisation de l'appareil 100 est présentée sur la Fig. 4.

La remorque Rq est également pourvue d'un dispositif de guidage Dg chargé de guider le lien L en direction de la première partie T1 tronconique. Sur cette Fig. 4, le dispositif de guidage Dg comprend un tube Tb dont une partie intermédiaire est disposée au niveau de la première partie T1 en considérant l'axe du cabestan Cb. Cette partie intermédiaire du tube Tb est disposée de manière perpendiculaire à l'axe du cabestan Cb. Les deux extrémités du tube Tb sont cintrées à l'équerre et sont respectivement fixées sur les deux parois latérales de la remorque Rq pour le tenir en place.

Un opérateur monte sur la passerelle Ps puis va dans le plateau Pt et coupe les liens L qui ceinturent la botte Bt, par exemple à l'aide d'un couteau, puis prend une extrémité de ceux-ci, et revient sur la passerelle Ps, les fait passer au-dessus du tube Tb, et les enroule d'au moins un tour autour du cabestan Cb. Il conserve en main l'extrémité libre des liens L et déclenche la mise en marche du moyen d'entraînement à rotation Mr en appuyant sur la pédale du distributeur hydraulique Dh, ce qui déclenche l'entraînement à rotation du cabestan Cb.

Compte tenu de la conicité ou de la concavité de la première partie T1, les liens L ripent en direction de la seconde partie T2. La tension de l'enroulement des liens L, lorsqu'ils parviennent sur cette seconde partie T2, est remplacée par la tension qu'exerce l'opérateur sur les brins libres et qui est relativement faible de l'ordre de quelques daN. L'opérateur peut ainsi facilement diriger les liens L défaits dans un conteneur disposé avantageusement sur la passerelle Ps. Lorsque les liens sont entièrement extraits de la botte, l'opérateur relâche l'appui sur la pédale du distributeur Dh et le cabestan Cb s'arrête de tourner. On remarquera que si l'opérateur cesse d'exercer une tension sur les extrémités libres des liens, la partie tronconique T1 patine sous les liens et la tension dans ceux-ci, entre la botte et le cabestan, devient quasi nulle. Là encore, les liens L retirés de la botte Bt et ôtés du cabestan Cb sont déposés dans le conteneur de collecte.

L'opérateur descend de la remorque et s'installe au volant du tracteur pour mettre en oeuvre le paillage ou la distribution de la botte Bt, en déclenchant, par une commande appropriée, le fonctionnement du moyen de transport Mt, du moyen de décompactage Mp et du moyen d'étalement Ml.

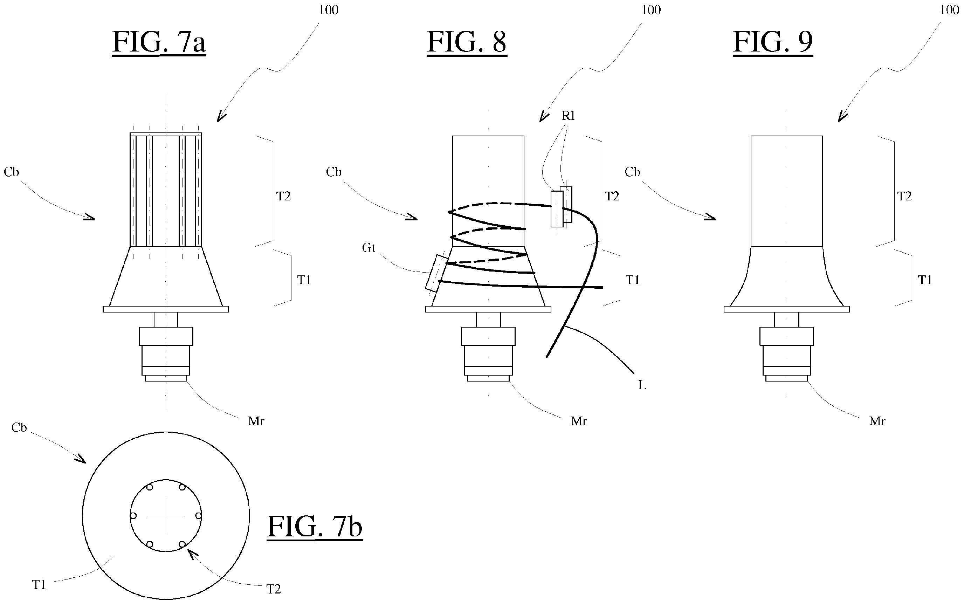

Dans une seconde variante de réalisation présentée sur les Figs. 7a et 7b, la seconde partie T2 du cabestan Cb en forme de pièce de révolution est formée d'une pluralité de tubes de relativement petit diamètre et qui sont répartis parallèlement autour de l'axe du cabestan Cb, en prolongeant la petite base de la première partie T1.

Dans une troisième variante de réalisation présentée sur la Fig. 8, l'appareil 100 est pourvu d'un galet Gt d'application du lien sur la partie T1 pour qu'il adhère sur celle-ci sans qu'il soit nécessaire d'exercer une traction sur son extrémité libre.

L'appareil 100 peut également être équipé d'une paire de rouleaux Rl de traction disposés en vis-à-vis de la seconde partie T2 pour automatiser la traction sur l'extrémité libre du lien. Au moins l'un des deux rouleaux Rl est relié à un moyen d'entraînement à rotation.

Dans une quatrième variante de réalisation présentée sur la Fig. 9, la première partie T1 constitutive du cabestan Cb présente, là encore, une pièce de révolution qui ne présente pas un profil tronconique mais un profil concave. En fonctionnement, le lien ripe de moins en moins lorsqu'il remonte cette partie T1 concave, sa tension diminue progressivement.

Une pailleuse portée, connue notamment par la publication FR-A1-3008273, peut être équipée d'un cabestan Cb tel qu'il vient d'être décrit.

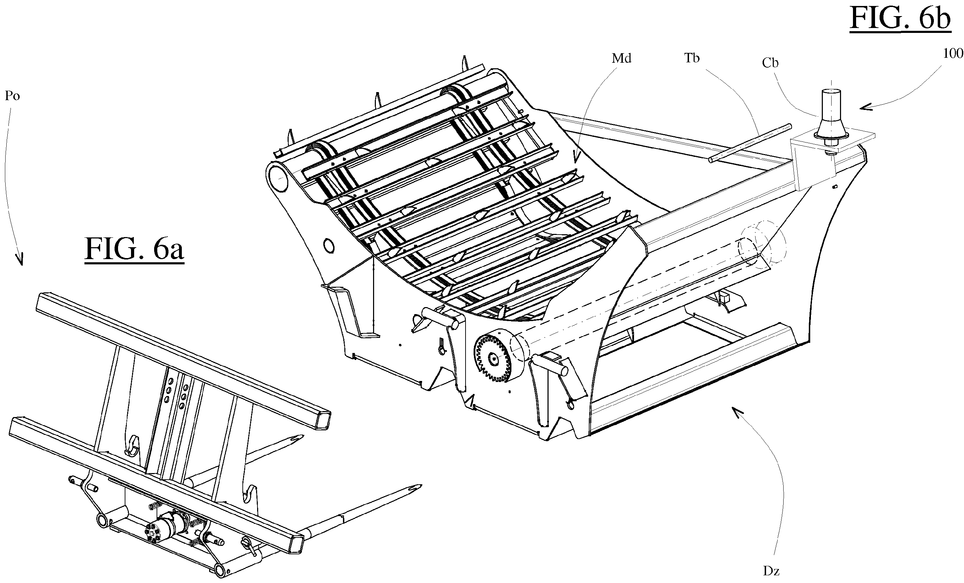

Sur la Fig. 6a est présenté un porte-outil Po qui est utilisé en tant que pique-bottes, à l'aide d'un engin de levage, pour piquer une botte, la soulever et la déposer dans un accessoire du porte-outil qui est sur la Fig. 6b, une dérouleuse Dz de botte cylindrique du type portée. Le porte-outil Po est également utilisé pour soulever et faire fonctionner la dérouleuse Dz portée. La dérouleuse Dz convient pour dérouler aussi bien une botte de litière animale, qu'une botte de fourrage.

Sur la Fig. 6b, la dérouleuse Dz de botte cylindrique comprend un châssis dans lequel est inclus un moyen de déroulage Md pour une botte cylindrique, comprenant une pluralité de tasseaux et dont les deux extrémités sont respectivement fixées sur deux chaînes circulant en boucle autour d'une paire d'arbres pourvus de pignons. La trajectoire supérieure des chaînes est concave pour caler latéralement la paroi cylindrique de la botte. L'un des arbres est moteur. Il est relié à cet effet à un engrenage destiné à coopérer avec un autre engrenage porté par le porte-outil et qui est relié à un moyen d'entraînement à rotation qui est préférentiellement un moteur hydraulique pouvant être raccordé avec le circuit hydraulique de l'engin de levage. La dérouleuse Dz est équipée d'un cabestan Cb pour retirer les liens, le filet ou le film de protection qui entourent ladite botte. L'appareil 100 est fixé, par exemple sur une traverse du châssis. On note également la présence d'un moyen de guidage du lien en direction de la partie T1 du cabestan Cb et qui est ici formé d'un tube Tb. Pendant le fonctionnement de la pailleuse, la nappe constitutive de la botte cylindrique est déroulée et déposée sur le sol.

La machine de l'invention susceptible d'être portée ou traînée et qui est porteur d'un cabestan pour retirer les liens, les filets ou les films de protection de bottes de litières animale ou de bottes de fourrage peut encore être :
- une machine pour défaire et distribuer des bottes cylindriques,
- une machine pour défaire et distribuer des bottes cylindriques, équipée d'un moyen de paillage incluant, par exemple, un rotor,
- une machine pour défaire et distribuer des bottes parallélépipédiques ou cylindriques, équipée d'un moyen de transport de la botte, incluant par exemple des tasseaux circulant en boucle, pour la déplacer en direction d'un moyen de paillage incluant un rotor.
- une machine pour défaire et distribuer des bottes parallélépipédiques ou cylindriques, équipée d'un moyen de transport de la botte, incluant par exemple des tasseaux circulant en boucle, pour la déplacer en direction d'un moyen de paillage incluant une turbine.

La machine pour défaire et distribuer des bottes de litière animale ou des bottes de fourrage de l'invention est, de manière générale, une machine conçue pour défaire le contenu d'une botte cylindrique ou parallélépipédique et le déposer sur le sol ou l'éparpiller à l'aide d'un organe de décompactage dont elle est pourvue. Ces deux machines sont communément appelées dans le métier, respectivement dérouleuse, pailleuse, ou dérouleuse pailleuse.

La machine pour défaire et distribuer des bottes de litière animale ou des bottes de fourrage de l'invention, peut être équipée d'un attelage conçu pour coopérer avec un attelage d'un moyen de levage susceptible de porter et déplacer ladite machine. Cette machine est communément appelée dans le métier, dérouleuse portée, pailleuse portée, ou dérouleuse pailleuse portée.

La machine pour défaire et distribuer des bottes de litière animale ou des bottes de fourrage de l'invention, peut également être portée par l'intermédiaire d'au moins un essieu et être équipée d'un timon conçu pour coopérer avec un attelage d'un engin de traction susceptible de déplacer par roulage ladite machine. Cette machine est communément appelée dans le métier, dérouleuse tractée, pailleuse tractée, ou dérouleuse pailleuse tractée.

La machine pour défaire et distribuer des bottes de litière animale ou des bottes de fourrage de l'invention, peut encore être équipée d'un moteur pouvant la déplacer et la faire fonctionner. Cette machine est communément appelée dans le métier, dérouleuse automotrice, pailleuse automotrice, ou dérouleuse pailleuse automotrice.

La machine pour défaire et distribuer des bottes de litière animale ou des bottes de fourrage de l'invention, peut encore être une machine stationnaire équipée d'un moteur électrique.

## Revendications

1. Machine pour défaire et distribuer des bottes de litière animale (Bt) ou des bottes de fourrage (Bt) comprenant :
- un moyen de transport (Mt) d'une botte (Bt) cylindrique ou parallélépipédique, un moyen de décompactage (Mp) de ladite botte, ledit moyen de transport étant agencé pour déplacer ladite botte en direction dudit moyen de décompactage,
- ou un moyen de déroulage (Md) d'une botte cylindrique, la machine comprenant un cabestan (Cb) pourvu d'un organe de traction comprenant une pièce de révolution (Pr, T1) reliée à un moyen d'entraînement à rotation (Mr), la pièce de révolution (Pr, T1) étant destinée à réceptionner au moins un enroulement de liens (L), d'un filet, ceinturant ladite botte ou d'un film de protection enveloppant ladite botte, pour le(s) tirer par adhérence d'au moins une boucle enroulée autour de ladite pièce de révolution, pendant le fonctionnement du moyen d'entraînement à rotation (Mr), afin de les extraire de ladite botte, **caractérisée en ce que** la machine est pourvue d'un dispositif de guidage (Dg) des liens, du filet ou du film de protection, en direction de la pièce de révolution (Pr, T1), le dispositif de guidage comprenant une paroi arrondie (Pi) disposée de sorte que les liens, le filet ou le film de protection tendus par le cabestan (Cb) puissent s'enrouler sur la pièce de révolution (Pr, T1).

2. Machine selon la revendication 1, **caractérisée en ce que** la paroi arrondie (Pi) est un tube (Tb).

3. Machine selon la revendication 1 ou 2, **caractérisée en ce que** la pièce de révolution est un cylindre (Pr).

4. Machine selon la revendication 1 ou 2, **caractérisée en ce que** la pièce de révolution est un tronc de cône formant une première partie (T1) du cabestan et **en ce que** ledit cabestan comprend une seconde partie (T2) de collecte temporaire des liens (L), du filet ou du film de protection, les deux parties (T1, T2) étant coaxiales, la seconde partie (T2) prolongeant la petite base de la première partie (T1) tronconique.

5. Machine selon la revendication 1 ou 2, **caractérisée en ce que** la pièce de révolution présente un profil concave formant une première partie (T1) du cabestan et **en ce que** ledit cabestan comprend une seconde partie (T2) de collecte temporaire des liens (L), du filet ou du film de protection, les deux parties (T1, T2) étant coaxiales, la seconde partie (T2) prolongeant la petite base de la première partie (T1) à profil concave.

6. Machine selon l'une quelconque des revendications précédentes, **caractérisée en ce que** le moyen d'entraînement à rotation (Mr) est un moteur hydraulique et **en ce qu'**elle est pourvue d'un distributeur (Dh) de commande raccordé audit moteur hydraulique pour le faire fonctionner.

7. Machine selon l'une quelconque des revendications précédentes, **caractérisée en ce qu'**elle est agencée sous la forme d'une remorque (Rq) portée par au moins un essieu (Es).

8. Machine selon l'une quelconque des revendications précédentes, **caractérisée en ce qu'**elle est pourvue d'une butée (Bu) disposée en vis-à-vis du cabestan (Cb) pour empêcher la botte (Bt) de venir en contact avec ledit cabestan pendant l'extraction des liens (L) de ladite botte.

## Patentansprüche

1. Maschine zum Zerlegen und Verteilen von Ballen aus Tierstreu (Bt) oder von Futterballen (Bt), welche umfasst:
- ein Mittel zum Transport (Mt) eines zylindrischen oder quaderförmigen Ballens (Bt), ein Mittel zur Auflockerung (Mp) des Ballens, wobei das Mittel zum Transport dazu eingerichtet ist, den Ballen in Richtung des Mittels zur Auflockerung zu bewegen,
- oder ein Mittel zum Abwickeln (Md) eines zylindrischen Ballens, wobei die Maschine eine mit einem Zugorgan versehene Winde (Cb) umfasst, die ein rotierendes Teil (Pr, T1) umfasst, das mit einem Drehantriebsmittel (Mr) verbunden ist, wobei das rotierende Teil (Pr, T1) dazu bestimmt ist, mindestens eine Windung von Bändern (L), eines Netzes, das den Ballen umgibt, oder einer Schutzfolie, die den Ballen umhüllt, aufzunehmen, um sie während des Betriebs des Drehantriebsmittels (Mr) durch Haftreibung wenigstens einer um das rotierende Teil gewickelten Schleife zu ziehen, um sie von dem Ballen abzuziehen, **dadurch gekennzeichnet, dass** die Maschine mit einer Vorrichtung zur Führung (Dg) der Bänder, des Netzes oder der Schutzfolie in Richtung des rotierenden Teils (Pr, T1) ausgestattet ist, wobei die Führungsvorrichtung eine gerundete Wand (Pi) umfasst, die derart angeordnet ist, dass die Bänder, das Netz oder die Schutzfolie, die durch die Winde (Cb) gespannt werden, sich auf das rotierende Teil (Pr, T1) aufwickeln können.

2. Maschine nach Anspruch 1, **dadurch gekennzeichnet, dass** die gerundete Wand (Pi) ein Rohr (Tb) ist.

3. Maschine nach Anspruch 1 oder 2, **dadurch gekennzeichnet, dass** das rotierende Teil ein Zylinder (Pr) ist.

4. Maschine nach Anspruch 1 oder 2, **dadurch gekennzeichnet, dass** das rotierende Teil ein Kegelstumpf ist, der einen ersten Teil (T1) der Winde bildet, und dadurch, dass die Winde einen zweiten Teil (T2) zur vorübergehenden Aufnahme der Bänder (L), des Netzes oder der Schutzfolie umfasst, wobei die zwei Teile (T1, T2) koaxial sind, wobei der zweite Teil (T2) die Deckfläche des kegelstumpfförmigen ersten Teils (T1) verlängert.

5. Maschine nach Anspruch 1 oder 2, **dadurch gekennzeichnet, dass** das rotierende Teil ein konkaves Profil aufweist, das einen ersten Teil (T1) der Winde bildet, und dadurch, dass die Winde einen zweiten Teil (T2) zur vorübergehenden Aufnahme der Bänder (L), des Netzes oder der Schutzfolie umfasst, wobei die zwei Teile (T1, T2) koaxial sind, wobei der zweite Teil (T2) die Deckfläche des ersten Teils (T1) mit konkavem Profil verlängert.

6. Maschine nach einem der vorhergehenden Ansprüche, **dadurch gekennzeichnet, dass** das Drehantriebsmittel (Mr) ein Hydraulikmotor ist, und dadurch, dass sie mit einem Steuerverteiler (Dh) ausgestattet ist, der an den Hydraulikmotor angeschlossen ist, um seinen Betrieb zu ermöglichen.

7. Maschine nach einem der vorhergehenden Ansprüche, **dadurch gekennzeichnet, dass** sie in der Form eines Anhängers (Rq) gestaltet ist, der von mindestens einer Achse (Es) getragen wird.

8. Maschine nach einem der vorhergehenden Ansprüche, **dadurch gekennzeichnet, dass** sie mit einem Anschlag (Bu) ausgestattet ist, der gegenüber der Winde (Cb) angeordnet ist, um zu verhindern, dass der Ballen (Bt) während des Abziehens der Bänder (L) von dem Ballen mit der Winde in Kontakt kommt.

## Claims

1. Machine for dismantling and distributing bales of animal litter (Bt) or bales of fodder (Bt) comprising:
- a means (Mt) for transporting a cylindrical or parallelepipedal bale (Bt), a means (Mp) for decompacting said bale, said transport means being arranged to displace said bale towards said decompacting means,
- or a means (Md) for unwinding a cylindrical bale, the machine comprising a capstan (Cb) provided with a traction member comprising a revolving piece (Pr, T1) linked to a rotation driving means (Mr), the revolving piece (Pr, T1) being intended to receive at least one winding of links (L), of a thread, binding said bale or of a protection film enveloping said bale, to pull it or them by adhesion of at least one loop wound around said revolving piece, during the operation of the rotation driving means (Mr), in order to extract them from said bale, **characterized in that** the machine is provided with a device (Dg) for guiding the links, the thread or the protection film, towards the revolving piece (Pr, T1), the guiding device comprising a rounded wall (Pi) disposed in such a way that the links, the thread or the protection film made taut by the capstan (Cb) can be wound on the revolving piece (Pr, T1).

2. Machine according to Claim 1, **characterized in that** the rounded wall (Pi) is a tube (Tb).

3. Machine according to Claim 1 or 2, **characterized in that** the revolving piece is a cylinder (Pr).

4. Machine according to Claim 1 or 2, **characterized in that** the revolving piece is a truncated cone forming a first part (T1) of the capstan and **in that** said capstan comprises a second part (T2) for temporarily collecting the links (L), the thread or the protection film, the two parts (T1, T2) being coaxial, the second part (T2) prolonging the small base of the tapered first part (T1).

5. Machine according to Claim 1 or 2, **characterized in that** the revolving piece has a concave profile forming a first part (T1) of the capstan and **in that** said capstan comprises a second part (T2) for temporarily collecting the links (L), the thread or the protection film, the two parts (T1, T2) being coaxial, the second part (T2) prolonging the small base of the first part (T1) with concave profile.

6. Machine according to any one of the preceding claims, **characterized in that** the rotation driving means (Mr) is a hydraulic motor and **in that** it is provided with a control distributor (Dh) connected to said hydraulic motor to make it operate.

7. Machine according to any one of the preceding claims, **characterized in that** it is arranged in the form of a trailer (Rq) borne by at least one axle (Es).

8. Machine according to any one of the preceding claims, **characterized in that** it is provided with an abutment (Bu) disposed facing the capstan (Cb) to prevent the bale (Bt) from coming into contact with said capstan during the extraction of the links (L) from said bale.
